(19) Europäisches Patentamt
European Patent Office
Office européen des brevets

(11) **EP 1 674 513 A1**

(12) **EUROPÄISCHE PATENTANMELDUNG**

(43) Veröffentlichungstag:
28.06.2006  Patentblatt 2006/26

(51) Int Cl.:
*C08K 5/00* (2006.01)    *C08J 3/28* (2006.01)
*C08J 3/24* (2006.01)

(21) Anmeldenummer: 05012080.7

(22) Anmeldetag: **04.06.2005**

(84) Benannte Vertragsstaaten:
AT BE BG CH CY CZ DE DK EE ES FI FR GB GR HU IE IS IT LI LT LU MC NL PL PT RO SE SI SK TR
Benannte Erstreckungsstaaten:
AL BA HR LV MK YU

(30) Priorität: **23.12.2004  DE 102004061985**

(71) Anmelder: **REHAU AG + Co**
**95111 Rehau (DE)**

(72) Erfinder: **Eibl, Stefan**
**95032 Hof (DE)**

(54) **TPV-Alternative**

(57)    Materialzusammensetzung, geeignet zur Vernetzung mit UV-Strahlung unter Bildung eines Elastomers, die sich dadurch auszeichnet, dass mindestens 4 Komponenten, welche in Summe 100 Gewichtsprozent ergeben, umfassend 80 bis 98,9 Gewichtsprozent mindestens eines Polymers (A), und 0,5 bis 8 Gewichtsprozent mindestens eines Vernetzungsverstärkers (B), der UV-silanisch und/oder UV-kovalent vernetzend wirkt, und 0,5 bis 8 Gewichtsprozent mindestens eines Photoinitiators (C), der bis 270 °C bei der Verarbeitung von polymeren Formteilen und dabei auftretender Scherbeanspruchung keine Zersetzung zeigt und zur Herabsetzung der Volatilität in der Polymermatrix verankert wird, und 0,1 bis 15 Gewichtsprozent mindestens eines Additivs (D), wobei die Materialzusammensetzung nach der Plastifizierung unter Einwirkung von UV-Strahlung in einem kontinuierlichen Fertigungsverfahren siliziumhaltige und/oder kovalente Vernetzungsstrukturen inter- und/oder intramolekular mit dem Polymer (A) bildet, wobei das aus der Materialzusammensetzung gebildete Elastomer einen Vernetzungsgrad von 65 bis 98 % besitzt und eine entropieelastische Rückstellung zeigt, welche bei einer Temperatur zwischen 70 und 170 °C und einer Spannung von 0,2 bis 1 N/mm$^2$ und nach 15 min Dehnbeanspruchung, wobei eine Dehnung von 40 bis 100 % erzeugt wird, eine Restdehnung von 0,01 bis 5 % nach 15 min Relaxationszeit bei 70 bis 170 °C zurück bleibt und einen Zugverformungsrest (gemessen entsprechend DIN ISO 2285 bei 70 °C) von 10 bis 50 %, bevorzugt 10 bis 30 %, aufweist.

Fig. 1

EP 1 674 513 A1

**Beschreibung**

Die vorliegende Erfindung betrifft vernetzte thermoplastische Elastomere mit einem hohen elastischen Rückstellvermögen bei höherer Temperatur.

Dynamisch vernetzte thermoplastische Elastomere, bezeichnet als TPV, sind zahlreich bekannt. TPV stellen ein partiell vernetztes Blendsystem aus mindestens einer vernetzten Weichphase und einer unvernetzten Hartphase dar. Diese Teilvernetzbarkeit ist verantwortlich für die thermoplastische Verarbeitbarkeit von TPV.

Vernetzte thermoplastische Elastomere und deren Herstellung werden in der Schrift US 6,696,516 offenbart. Wesentliche Bestandteile sind ein Ethylen-alpha-Olefin-Copolymerkautschuk und ein kristallines alpha-Olefin-Polymer, beispielsweise Polypropylen. Durch dynamische Vulkanisation, welche thermisch, vorzugsweise durch ein organisches Peroxid oder durch ein Phenolharz, vulkanisierenden Schwefel oder para-Chinondioximverbindungen oder durch Bismaleimidverbindungen oder durch Epoxyverbindungen oder durch Silane oder durch Aminharze, erfolgt, wobei die Vulkanisationstemperatur oberhalb der Schmelztemperatur einer Komponente, welche als amorphes Polymer beschrieben wird, liegt.

Darüber hinaus sind Blends mit TPV ebenfalls bekannt.

Die Schrift US 5.910.543 offenbart eine Thermoplast-Elastomer-Zusammensetzung mit polaren und unpolaren Kautschukkomponenten. Dabei sind neben polaren und unpolaren Kautschukkomponenten auch hochschmelzende Thermoplaste, wie beispielsweise Polyamide und/oder Polyester, in der Zusammensetzung enthalten. Die Vernetzung der Polymerlegierung aus Thermoplast und Elastomer erfolgt durch dynamische Vulkanisation.

Die Schrift US 6,653,401 lehrt die Herstellung einer Thermoplast-Elastomer-Zusammensetzung, bestehend aus Polystyrol als Matrixkomponente, einer Kautschukkomponente, welche aus teilweise oder vollständig vernetztem Ethylen-alpha-Olefin-Copolymer und einem Verträglichkeitsvermittler besteht.

Aufgrund ihrer elastomerähnlichen Eigenschaften, ihrer hohen Flexibilität, der frei wählbaren Shore-Härte und der günstigen Verarbeitbarkeit im Spritzguss- oder Extrusionsverfahren sowie der leichten Einfärbbarkeit haben TPV große Bedeutung in der Kunststoffverarbeitung erlangt.

Heutzutage sind TPV in die klassischen Domänen von Gummis bzw. vulkanisierten Kautschuken vorgedrungen, und lösen diese allmählich ab in den Bereichen Dichtungen, Dämpfungen, Schwingungsentkopplung, bei Schäumen oder Isolierungen, Ummantelungen in Automobilen, Kabelanwendungen, in der Möbelindustrie, beim Kanal- und Rohrleitungsbau, in der Akustiktechnik, und im Kühl- und Waschgerätebau.

Neuere Anwendungen von TPV finden sich zudem in der Textilfaserindustrie, wie die Schrift US 6,776,997 lehrt. Dies gelingt dadurch, dass der Blendzusammensetzung eine weitere Komponente mit entsprechenden funktionellen Gruppen, welche die Haftung an der Textilfaser, polaren Polymeren oder Metallen erhöhen, beigemengt wird.

Nachteil des Standes der Technik

Die thermoplastische Verarbeitbarkeit von TPV wird dadurch erreicht, dass TPV keine vollständige Vernetzung aufweisen. Sie besitzen daher in ihrer Blendzusammensetzung noch einen ausreichenden thermoplastischen Anteil, so dass die Verarbeitung im Spritzguss- und/oder Extrusionsprozess gewährleistet ist.

Das parallele Vorliegen von vernetzten und unvernetzten Phasen hat in der Polymerverarbeitung, in der die Polymermasse vor der Formgebung plastifiziert wird, zahlreiche Nachteile:

1) Vorvernetzungen und Schwankungen in der Verteilung der vernetzten und unvernetzten Zonen sind schwer zu kontrollieren.

2) Vernetzte Zonen weisen im Vergleich zu unvernetzten Bereichen eine höhere Schmelzeviskosität auf. Scherkräfte, die in der Extrusion auftreten, können die Blendmorphologie der TPV beeinflussen. Dies kann bis zur Entmischung von vernetzten und unvernetzten Bereichen führen. Neben diesen verarbeitungstechnischen Problemen ist auch das Blendkonzept aus unvernetzten und vernetzten Bestandteilen und seine daraus resultierenden mechanischen Eigenschaften zu hinterfragen.

1) Die thermoplastische Verarbeitbarkeit führt dazu, dass TPV als teilvernetzte Werkstoffe nur ein unzureichendes elastisches Rückstellverhalten zeigen. Die Nachteile werden insbesondere bei hohen Temperaturen deutlich.

2) Die Vernetzungskinetik von Peroxiden und/oder Phenolharzen ist aufgrund ihrer schwankenden Reaktivität, nur schwer zu kontrollieren. Dies hat eine inhomogene Vernetzungsgradverteilung mit übervernetzten Zonen, welche an stippenartigen Einschlüssen im Formteil zu erkennen sind, und deutlich untervernetzten Abschnitten zur Folge. Die inhomogene Vernetzung führt zu geringerer Formbeständigkeit und bedingt einen schlechten Abriebschutz. Ebenfalls nimmt das schlechte thermische Rückstellvermögen weiter ab.

Diese Vielzahl von verfahrenstechnischen Nachteilen und materialseitigen Unzulänglichkeiten von TPV wurden von den Erfindern erkannt.

Formteile aus TPV als Einbauteile und oder Komponenten vielfältiger Art, beispielsweise für Dichtungen, als Kabelummantelungen, als Scheibenwischer, zur Schwingungsentkopplung als Dämpfungsmaterialien, als Vibrationsdämpfer, als Schläuche, als Formteile mit haptischen Eigenschaften, zum Schutz vor Steinschlag, als Manschetten, als Reifen im Bereich Industrieanwendung, beispielsweise für die Herstellung von Automobilen, Hausgeräten, Bau und Konstruktionswerkstoffen, Spielzeugen, medizintechnische Artikeln, im Flugzeug- und Schiffsbau, in der Maschinen- und Anlagentechnik, und der Schienen-, Bahn- und Fördertechnik, im Post- und Fernmeldewesen, in der Elektronik und Elektrotechnik, der Stromversorgung, Lebensmittelindustrie und Verpackungsindustrie, müssen heute sehr rigide Anforderungen hinsichtlich Formbeständigkeit erfüllen.

Die Anforderungen für Formteile in diesen Bereich steigen mit dem technologischen Fortschritt. Bisher werden Formteile aus TPV relativ moderaten Prüfbedingungen zur Untersuchung der Formbeständigkeit, wie dem Zugverformungsrest (DIN ISO 2285), durchgeführt bei 70°C, unterzogen.

Die Beurteilung von entropieelastischen Eigenschaften ist jedoch erst bei höheren Temperaturen sinnvoll.

Aufgabenstellung

Aufgabe der vorliegenden Erfindung ist es, eine Werkstoffzusammensetzung bereitzustellen, welche im vernetzten Zustand ein hohes elastisches Rückstellvermögen bei Temperaturen oberhalb von 70 °C zeigt.

Lösung

Die Lösung dieser Aufgabe gelingt dadurch, dass eine Materialzusammensetzung, geeignet zur Vernetzung mit UV-Strahlung, bestehend aus mindestens 4 Komponenten, welche in Summe 100 Gewichtsprozent ergeben, umfassend 80 bis 98,9 Gewichtsprozent mindestens eines Polymers (A), 0,5 bis 8 Gewichtsprozent mindestens eines Vernetzungsverstärkers (B), der UV-silanisch und/oder UV-kovalent unter Ausbildung von Kohlenstoff-Kohlenstoff-Bindungen vernetzend wirkt, 0,5 bis 8 Gewichtsprozent mindestens eines Photoinitiators (C), der bis 270 °C bei der Verarbeitung von polymeren Formteilen und dabei auftretender Scherbeanspruchung keine Zersetzung zeigt und zur Herabsetzung der Volatilität in der Polymermatrix verankert wird, und 0,1 bis 15 Gewichtsprozent mindestens eines Additivs (D), die nach der Plastifizierung unter Einwirkung von UV-Strahlung in einem kontinuierlichen Fertigungsverfahren siliziumhaltige und/oder kovalente Vernetzungsstrukturen inter- und/oder intramolekular mit dem Polymer (A) bildet, bereitgestellt wird.

Im folgenden wird die erfindungsgemäße Materialzusammensetzung näher charakterisiert.

Das Polymer (A) der Materialzusammensetzung enthält polare und/oder unpolare und/oder linear-aliphatische und/oder cycloaliphatische und/oder aromatische und/oder gemischt aromatisch-aliphatische Gruppen.

Das Polymer (A) ist dabei kristallin und/oder semikristallin und/oder amorph.

Als wesentliches repetierendes Strukturelement enthält das Polymer (A) eine aliphatische und/oder cycloaliphatische Kohlenwasserstoffgruppe.

Als aliphatische und/oder cycloaliphatische Kohlenwasserstoffgruppe kann eine Methyl-, - $[CH_3]$, und/oder eine Methylen-, -$[CH_2]_x$- mit $x \geq 1$, und/oder eine Methyliden-, $[=CH_2]$-, und/oder eine -$[CH_2-CHX]$- und/oder eine -$[CH_2-CHR]$- und/oder eine -$[CH_2-CX_2]$- und/oder eine -$[=CH-CH_2]$- und/oder eine $[=CH-CHX]$- und/oder eine $[=CH-CHR]$- und/oder eine $[=CX-CH_2]$- und/oder eine $[=CX-CHX]$- und/oder eine $[=CX-CHR]$- und/oder eine $[=CR-CHX]$- und/oder eine $[=CR-CHR]$-Gruppe enthalten sein, wobei X ein Element der Gruppe der Halogene, R ein organischer Rest, der insbesondere auch die Elemente Wasserstoff und/oder Kohlenstoff und/oder Schwefel und/oder Stickstoff und/oder Sauerstoff enthalten kann, ist.

Das Polymer (A) kann als Homopolymer und/oder Copolymer vorliegen.

Dabei kann das Polymer (A) in seiner Ausgangsform vorliegen und/oder durch Pfropfungsreaktionen und/oder Additionsreaktionen und/oder Kondensationsreaktionen mit mindestens einer funktionellen Gruppe verschiedener Art modifiziert sein.

Als funktionelle Gruppe eignet sich dazu eine Hydroxygruppe und/oder eine Aminogruppe und/oder eine Carbonsäure- und/oder eine Carbonsäureester- und/oder eine Carbonsäureanhydridgruppe und/oder eine Imid- und/oder eine Amid- und/oder eine Oxazolin- und/oder eine Epoxygruppe und/oder eine Silyl- und/oder eine Alkoxysilylgruppe und/oder eine ionische Gruppe, wie eine Carboxylatgruppe.

Das Polymer (A) kann in seiner Ausgangsform vom Typ eines Polyolefins und/oder eines thermoplastischen Elastomers (TPE), und/oder eines Elastomers und/oder eines Kautschuks und/oder eines Polystyrols (PS), und/oder eines Polyamids und/oder eines Polyesters und/oder eines Polyvinylchlorids (PVC), und/oder eines Polymethacrylats und/oder eines Acrylnitrilbutadienstyrol-Terpolymers (AS), und/oder eines Polyoxymethylens (POM), und/oder eines Polyurethans (PUR), und/oder eines Fluorpolymers und/oder eines flüssigkristallinen Polymers (LCP), und/oder eines thermoplastischen Silikonelastomers und/oder eines Ethylen-Styrol-Interpolymers (ESI) und/oder einer Mischung hiervon sein.

Das Polyolefin ist dabei ein Homo- und/oder Copolymeres des Ethylen und/oder des Propen und/oder des Buten und/oder des Isopren und/oder des Ethylidennorbornen und/oder des Cyclopentadien und/oder des Butadien und/oder ein Copolymeres des Etylen mit dem Ester der Acrylsäure oder der Methacrylsäure mit Methanol oder Ethanol oder Butanol und/oder ein Copolymeres des Ethylen mit Vinylacetat, wie ein Lineares Polyethylen geringer Dichte (linear low density polyethylene (LLDPE)) und/oder ein Polyethylen geringer Dichte (low density polyethylene (LDPE)) und/oder ein Polyethylen ultrageringer Dichte (ultra low density polyethylene (ULDPE)) und/oder ein Lineares Polyethylen geringer Dichte, hergestellt mit Metallocen-Katalysatoren (metallocene linear low density polyethylene (mLLDPE)) und/oder ein Polyethylen sehr geringer Dichte (very low density polyethylene (VLDPE)) und/oder ein Polyethylen mit geringem Molekulargewicht (low molecular weight polyethylene (LMWPE)) und/oder ein Polyethylen mittlerer Dichte (middle density polyethylene (MDPE)) und/oder ein Polyethylen hoher Dichte (high density polyethylene (HDPE)) und/oder ein Polyethylen mit ultrahohem Molekulargewicht (ultra high molecular weight polyethylene (UHMWPE)) und/oder ein Polyethylen mit hohem Molekulargewicht (high molecular weight polyethylene) und/oder ein Polypropylen (PP) und/oder ein Polyolefinelastomer und/oder ein Polybutadien und/oder ein Ethylenmethylacrylat-Copolymer (EMA) und/oder ein Ethylenethylacrylat-Copolymer (EEA) und/oder ein Ethylenbutylacrylat-Copolymer (EBA) und/oder ein Ethylenvinylacetat-Copolymer (EVA) und/oder ein Cycloolefincopolymer (COC) und/oder ein Cycloolefinpolymer (COP) und/oder ein Polyolefincompound und/oder ein Polyolefinelastomer (POE) und/oder eine Mischung hiervon.

Das thermoplastische Elastomer ist vom Typ eines Blockcopolymeren und/oder einer Elastomerlegierung und/oder einer Mischung hiervon.

Dabei kann das thermoplastische Elastomer vom Typ eines Blockcopolymeren vom Styroltyp (TPE-S), und/oder vom Olefintyp (POE), und/oder ein thermoplastisches Polyether-Ester-Elastomer (TPE-E), und/oder ein thermoplastisches Polyurethan (TPU), und/oder ein Polyetherblockamid, PEBAX und/oder eine Mischung hiervon sein.

Als thermoplastisches Elastomer vom Typ einer Elastomer-Legierung ist ein dynamisch vernetztes thermoplastisches Elastomer (TPV), und/oder ein thermoplastisches Blend (TPO), und/oder ein thermoplastisches Silikonvulkanisat (TPSiV), und/oder eine Mischung hiervon geeignet.

Das Elastomer und/oder der Kautschuk ist ausgewählt aus einem Acrylnitril-Elastomer (ACM), und/oder einem Cis-1,4-Polybutadien und/oder einem Chloroprene und/oder einem Neoprenkautschuk (CR), und/oder einem chlorsulfoniertes Polyethylen (CSM), und/oder einem Ethylen-Propylen-Dien-Terpolymer (EPDM), und/oder einem Ethylen-Propylen-Elastomer (EPM), und/oder einem Fluorelastomer (FKM), und/oder einem Ethylen-Acryl-Polymer (AEM), und/oder einem Acrylnitril-Butadien-Elastomer (NBR), und/oder einem hydrierter Acrylnitril-Butadien-Kautschuk (HNBR), und/oder einem Naturkautschuk (NR), und/oder einem chloriertes Polyethylen (PE-C), und/oder einem Polyesterurethan (AU), und/oder einem Polyetherurethan (EU), und/oder einem Polyacrylatkautschuk (ACM), und/oder einem Butadienkautschuk (BR), und/oder einem Isoprenkautschuk (IR), und/oder einem Fluorelastomer (FPM), und/oder einem Polyolefin mit vulkanisierten Blöcken (TPV), und/oder einer Mischung hiervon.

Dabei kann das Polymer (A) einzeln und/oder als Mischung vorliegen.

Der Vernetzungsverstärker (B) kann dabei UV-silanische, indem siliziumhaltige Komponenten zugefügt sind, und/oder UV-kovalente Vernetzungsstrukturen ausbilden.

Die siliziumhaltige Komponente kann ein Vinyltrimethoxysilan und/oder ein Vinyltriethoxysilan und/oder ein Vinyltriacetoxysilan und/oder ein Vinyltris(2-methoxyethoxy)silan und/oder ein 3-Methacryloxypropyl-trimethoxysilan und/oder ein Methacryloxymethyl-methyldimethoxysilan und/oder ein Methacryloxymethyl-trimethoxysilan und/oder ein Methacryloxymethyl-methyldiethoxysilan und/oderein Methacryloxymethyl-triethoxysilan und/oder ein Octadecylmethyldimethoxysilan und/oder eine Mischung hiervon sein.

Die siliziumhaltige Komponente ist dabei erfindungsgemäß bezogen auf 100 Gewichtsprozent Polymer (A) zwischen 0,5 und 6 Gewichtsprozent enthalten.

In der Materialzusammensetzung kann die siliziumhaltige Komponente in Gegenwart eines Photoinitiators (C) durch UV-Strahlung mit dem Polymer (A) unter Ausbildung einer kovalenten Kohlenstoff-Kohlenstoff-Bindung reagieren.

Die Materialzusammensetzung kann auch mit siliziumhaltigen Komponenten in Gegenwart von UV-Strahlung anorganische $[Si_xO_y]$-Einheiten ausbilden.

Die anorganischen $[Si_xO_y]$-Einheiten können das Polymer (A) inter- und/oder intramolekular vernetzen.

Die Reaktion der siliziumhaltigen Komponente zu vernetzenden $[Si_xO_y]$-Einheiten wird unter dem Einfluss von Luftsauerstoff und/oder Ozon und/oder Lewis-Säuren begünstigt.

Die Verbindungen zur Ausbildung UV-kovalenter Vernetzungsstrukturen können ausgewählt sein aus Triallylcyanurat (TAC), und/oder Triallylisocyanurat (TAIC), und/oder Trimethallylisocyanurat (TMAIC), und/oder Trimethylolpropantrimethacrylat (TRIM), und/oder Pentaerythritol-triacrylat und/oder Pentaerythritol-trimethacrylat und/oder Pentaerythritol-tetraacrylat und/oder Pentaerythritol-tetramethacrylat und/oder Dipentaerythritol-pentaacrylat und/oder Dipentaerythritol-pentamethacrylat und/oder Ditrimethylolpropan-tetraacrylat und/oder Ditrimethylolpropan-tetramethacrylat und/oder Polymethylen-Polyphenylen-N-maleinimid und/oder Tris(4-vinyloxybutyl)trimellitat und/oder Bis(4-vinyl-oxybutyl)isophthalat und/oder einer Mischung hiervon.

Diese Verbindungen zur Ausbildung UV-kovalenter Vernetzungsstrukturen können, bezogen auf 100 Gewichtsprozent Polymer (A), zwischen 0,5 und 10 Gewichtsprozent, bevorzugt zwischen 1 und 3 Gewichtsprozent, zugesetzt wird.

Der Photoinitiator (C) ist ausgewählt aus einem Derivat des Benzophenons und/oder einem Derivat des Benzils und/oder ist IRGACURE™ 754, ein Zweikomponentensystem aus Oxyphenyl-essigsäure-2-[2-(2-oxo-2-phenyl-acetoxy-ethoxy]-ethylester und Oxy-phenylessigsäure-2-(2-hydroxy-ethoxy)ethylester und/oder ist IRGACURE™ 369, 2-Benzyl-2(dimethylamino)-4-morpholinobutyrophenon und/oder ist eine Mischung hiervon.

Es ist vorteilhaft, wenn das Derivat des Benzophenons und/oder das Derivat des Benzils UV-Absorptionsbanden aufweist, die komplementär zu den Banden im Emissionsspektrum der UV-Strahlenquelle liegen.

Die Substituenten des Derivats des Benzophenons und/oder des Derivats des Benzils können in den Positionen 1 bis 10, wahlweise in den Positionen 1 und/oder 2 und/oder 3 und/oder 4 und/oder 5 und/oder 6 und/oder 7 und/oder 8 und/oder 9 und/oder 10, der Benzolringe Wasserstoffatome und/oder Alkyl- (C1 bis C24) und/oder Cycloalkyl- und/oder Cycloalkenyl- und/oder Alkenylgruppen und/oder Alkylglycol- und/oder Alkenylglycolgruppen und/oder Acyl- und/oder Acylamid und/oder Acylimidgruppen und/oder Alkanoyl- und/oder Alkenoylgruppen und/oder Amino- und/oder Aminoalkyl und/oder Aminoalkenyl- und/oder Aminoalkenylglycoylgruppen und/oder Imino- und/oder Iminoalkyl- und/oder Iminoalkenyl- und/oder Iminoalkenylglycoyl- und/oder Hydroxy- und/oder Alkoxy- und/oder Alkenoxy- und/oder Benzyl- und/oder Phenyl- und/oder Phenoxy- und/oder Phenylamin- und/oder Diphenylimin- und/oder N-Heterocylen auf Basis von Pyridin, Pyrrol, Pyrrazol, Pyrrolidon, Pyrrolidinopyridin, Pyrimidin, Pyrazin, Pyridazin, Pyrazol, Imidazol, Piperidin, Tetrahydrofuran, Furan, Lacton und/oder Chlorogruppen tragen.

Die Reste R der Ketalgruppen des Benzils sind Methyl- und/oder Ethyl- und/oder Propyl- und/oder Butyl-Gruppen.

Der Photoinitiator (C) ist insbesondere ausgewählt aus para-Dodecylbenzophenon.

Para-Dodecylbenzophenon kann über den Dodecylrest

(1) an die Polymermatrix kovalent durch die Einwirkung von UV-Strahlung gebunden werden und

(2) zeigt mit seinem positiven induktiven Effekt (+I-Effekt) bis 270 °C keine Zersetzung und/oder thermischen Abbau und/oder Spaltung der Acylbindung.

Erfindungsgemäß sind weitere Komponenten in der Materialzusammensetzung enthalten, wobei diese umfassen Radikalfänger (E) und/oder Lewis-Säuren (F) und/oder grenzflächenaktive Substanzen (G) und/oder Füllstoffe (H) und/oder Verarbeitungshilfsmittel (I) und/oder Mischungen hiervon.

Radikalfänger (E) können aus einem Methylethylketon und/oder einem Methylisobutylketon und/oder einem sterisch gehindertes Amine (HALS), und/oder einem Benzotriazol und/oder einem Diphenylacrylat und/oder einem Zimtsäureester und/oder einem Derivat des 2,2,6,6-Tetramethyl-piperidin-1-oxyl (TEMPO), und/oder einem 4-Hydroxycoumarin und/oder einem D, L-$\alpha$-Tocopherol und/oder einer Mischung hiervon ausgewählt sein.

Radikalfänger (E) können zwischen 0,01 und 0,5 Gewichtsprozent, bezogen auf 100 Gewichtsprozent Polymer (A), eingesetzt werden.

Als Lewis-Säure (F) eignet sich ein Zinn-dioctanoat und/oder ein Zinnoxalat und/oder ein Zinnoxid und/oder ein Dioctylzinndilaurat und/oder ein Dibutylzinndilaurat und/oder ein Laurylstannoxan und/oder ein Dibutylzinncarboxylat und/oder ein Monobutylzinntris(2-ethyl-hexanoat) und/oder ein Dibutylzinndiisooctanoat und/oder ein Dibutylzinndiacetat und/oder ein Dibutylzinnoxid und/oder eine Mischung hiervon.

Die Lewis-Säure (F) kann zwischen 0,01 und 0,2 Gewichtsprozent, bezogen auf 100 Gewichtsprozent Polymer (A), zugegeben werden.

(1) durch Ausbildung von Charge-Transfer-Verbindungen und/oder
(2) über van-der-Waals-Wechselwirkungen mit den polaren Silylalkoxygruppen Si-O-R eine Spaltung der Si-O- und/oder O-R-Bindungen, wobei siliziumhaltige Fragmente entstehen.

Die grenzflächenaktive Substanz (G) kann ausgewählt sein aus einer siliziumhaltigen Verbindung.

Erfindungsgemäß kann die siliziumhaltige Verbindung ausgewählt sein aus einem Vinyltrimethoxysilan und/oder einem Vinyltriethoxysilan und/oder einem Vinyltriacetoxysilan und/oder einem Vinyltris(2-methoxyethoxy)silan und/oder einem 3-Methacryloxypropyl-trimethoxysilan und/oder einem Methacryloxymethyl-methyldimethoxysilan und/oder einem Methacryloxymethyl-trimethoxysilan und/oder einem Methacryloxymethyl-methyldiethoxysilan und/oder einem Methacryloxymethyl-triethoxysilan und/oder einem Methyltrimethoxysilan und/oder einem Methyltriethoxysilan und/oder einem Dimethyldiethoxysilan und/oder einem Trimethylethoxysilan und/oder einem Isooctyltrimethoxysilan und/oder einem Isooctyltriethoxysilan und/oder einem Hexadecyltrimethoxysilan und/oder einem Cyclohexylmethyldimethoxysilan und/oder einem Dicyclopentyldimethoxysilan und/oder einem Phenyltriethoxysilan und/oder einem Octadecylmethyldimethoxysilan und/oder einem 3-Aminopropyltriethoxysilan und/oder einem 3-Aminopropyltrimethoxysilan und/oder einem Glycidylpropyltrimethoxysilan und/oder einem 3-Aminopropyldiethoxysilan und/oder einem Octamethylcyclotetrasiloxan und/oder einem Decamethylcyclopentasiloxan und/oder einem Dodecamethylcyclohexasiloxan und/oder einem Hexamethyldisiloxan und/oder einem Hexamethyldisilazan und/oder einem Hexamethyldisilan und/oder einem Tetramethylsilan und/oder einem Tetraethoxysilan und/oder einem Trimethylsilyldimethylamin und/oder einer Mischung hiervon.

Dabei kann die grenzflächenaktive Substanz (G) zwischen 0,1 und 10 Gewichtsprozent, bezogen auf 100 Gewichtsprozent Polymer (A), in der Materialzusammensetzung enthalten sein.

Die grenzflächenaktive Substanz (G) ist zur Anbindung von silikatischen Füllstoffen geeignet, wie Glasfasern und/oder anorganischen Füllstoffen auf Basis von Metalloxiden und/oder Schichtsilikaten und/oder Talkum und/oder Kaolin und/oder Wollastonit und/oder Zeolithen, die sie UV-vernetzend an die Polymermatrix bindet.

Der Füllstoff (H) ist ausgewählt ist aus Fasern und/oder Pulver und/oder Partikel, bestehend aus Metallen und/oder Kohlenstoff-Moditikationen und/oder Naturstoffen und/oder Gläsern und/oder Keramiken und/oder Metalloxiden und/oder Kunststoffen und/oder Schichtsilikaten.

Als Metalloxide sind sphärolithische Metalloxidpartikel und/oder monodisperse Metalloxidnanopartikel und/oder nanoskalige Metalloxidfasern und/oder nanoskalige Keramikwhisker und/oder Schichtsilikate und/oder Aerosile hydrophil und/oder hydrophobiert und/oder Aerogele hydrophil und/oder hydrophobiert und/oder Zeolithe und/oder Silsesquioxane und/oder Mischungen hiervon geeignet.

In der Materialzusammensetzung wird durch die grenzflächenaktive Substanz (G) und den Füllstoff (H) ein interpenetrierendes anorganisches Netzwerk gebildet. Das interpenetrierende anorganische Netzwerk wird an die Polymermatrix des Polymeren (A) angebunden.

Die Anbindung an das Polymer (A) erfolgt bei Exposition an UV-Strahlung.

Die Anbindung an das Polymer (A) bei Exposition an UV-Strahlung wird begünstigt durch die Anwesenheit mindestens eines Photoinitiators (C) und/oder mindestens einer Lewis-Säure (F) und/oder Luftsauerstoff und/oder Ozon und/oder Mischungen hiervon.

Schichtsilikate als Füllstoff (H) können aus Smectit-Schichtsilikaten der Montmorillonit- oder Beidellit-Reihe, umfassend Montmorillonit $Na_{0,33}\{(Al_{1,67}Mg_{0,33})(OH)_2[Si_4O_{10}]\}$ und/oder Beidellit $(Ca,Na)_{0,3}\{Al_2(OH)_2[Al_{0,5}Si_{3,5}O_{10}]\}$ und/oder Nontronit $Na_{0,33}\{Fe_2(OH)_2[Al_{0,33}Si_{3,67}O_{10}]\}$ und/oder Saponit $(Ca,Na)_{0,33}\{(Mg,Fe)_3(OH)_2[Al_{0,33}Si_{3,67}O_{10}]\}$ und/oder Hectorit $Na_{0,33}\{Mg,Li)_3(OH, F)_2[Si_4O_{10}]\}$ und/oder exfolierten Schichtsilikaten und/oder Organoclays und/oder Mischungen hiervon bestehen.

Die Aerosile und/oder Aerogele können aus Silikaten und/oder Titandioxid und/oder Zirkoniumdioxid und/oder Dialuminiumtrioxid bestehen.

Erfindungsgemäß sind die monodispersen Metalloxidnanopartikel aus $RSi(OR')_3$ und/oder $RR''Si(OR')_2$ und/oder $R_2Si(OR')_2$ und/oder $Ti(OR)_4$ und/oder $Zr(OR)_4$ und/oder $Al(OR)_3$ und/oder Mischungen hiervon gebildet.

Nanoskalige Metalloxidfasern und/oder nanoskalige Keramikwhisker enthalten Titandioxid, $TiO_2$ (Rutil- und/oder Anatas- und/oder Brookit-Modifikation) und/oder Zirkoniumdioxid, $ZrO_2$ (monoklines $\alpha$-$ZrO_2$ und/oder tetragonales $\beta$-$ZrO_2$ und/oder kubisches $\gamma$-$ZrO_2$), und/oder Dialuminiumtrioxid, $Al_2O_3$ (hexagonales $\alpha$-$Al_2O_3$ und/oder $\gamma$-$Al_2O_3$ mit kubisch dichtester Packung).

Die nanoskaligen Metalloxidfasern und/oder nanoskaligen Keramikwhisker Mischoxide können ausgewählt sein aus $Al_2O_3$ und/oder $TiO_2$ und/oder $ZrO_2$ und/oder $Y_2O_3$ und/oder $B_2O_3$ und/oder $SiO_2$ und/oder FeO und/oder $Fe_2O_3$ und/oder $Na_2O$ und/oder CaO und/oder MgO und/oder $K_2O$.

Die nanoskaligen Metalloxidfasern und/oder nanoskaligen Keramikwhisker liegen erfindungsgemäß einzeln und/oder in Bündeln vor, wobei die Faserlänge 50 nm bis 2 cm, der Außendurchmesser 1 nm bis 500 nm und das Längen/Dickenverhältnis größer 20 beträgt.

Die Konzentration des Füllstoffs (H) kann zwischen 0,1 und 40 Gewichtsprozent, bezogen auf 100 Gewichtsprozent Polymer (A), betragen.

Das Verarbeitungshilfsmittel (I) kann ausgewählt sein aus einem Stabilisator und/oder einer elektrisch leitfähiger Substanz und/oder einer antielektrostatischer Substanz und/oder einer antimikrobiellen Substanz und/oder einer bakteriziden Substanz und/oder einem Schaumbildner und/oder einem Hilfsmittel zur Hydrophobierung und/oder einem flammhemmendem Hilfsmittel und/oder einer Mischungen hiervon.

Das Verarbeitungshilfsmittel (I) kann zwischen 0,1 und 40 Gewichtsprozent, bezogen auf 100 Gewichtsprozent Polymer, enthalten sein.

Die erfindungsgemäße Materialzusammensetzung kann zur Herstellung von Formteilen, ausgewählt aus Extrudaten, Coextrudaten, Compositen und Verbundwerkstoffen eingesetzt werden.

Insbesondere können damit Formteile jeglicher Art, insbesondere Schläuche, Dichtungen, Manschetten, Fasern und Profile gefertigt werden.

Das Verfahren zur UV-Vernetzung der erfindungsgemäßen Materialzusammensetzung zeichnet sich dadurch aus, dass in einem kontinuierlichen Fertigungsprozess aus der Materialzusammensetzung durch Plastifizieren und nachfolgendes Formen ein Formteil bereitgestellt wird, das eine Wandstärke von größer 0,5 mm aufweist, welches bei einer Fertigungsgeschwindigkeit von 5 bis 100 m/min unter Einstrahlung von UV-Licht der Wellenlänge 120 bis 450 nm mit einer Strahlungsintensität im UV-Bereich von 10 bis 200 W/cm je Strahlenquelle, ausgesandt von mindestens einer monochromatischen und/oder polychromatischen UV-Strahlenquelle, umfassend einen Excimer-Laser, ausgewählt aus einem Xenon-Fluorid- oder einem Xenon-Chlorid- oder einem Krypton-Fluorid- oder einem Krypton-Chlorid-Laser, und/ oder einer Excimer-Lampe, ausgewählt aus einer Xenon-Chlorid- oder einer Krypton-Chlorid- oder einer Krypton-Bromid-Lampe, und/oder einer Quecksilberdampflampe mit Mikrowellenanregung oder Lichtbogenanregung und/oder einer Quecksilberdampflampe mit Eisen- oder Gallium-Indium- oder Gallium-Blei-Dotierung, auf welches UV-Licht vor, während oder nach dem Erstarren der plastifizierten Materialzusammensetzung unter Ausbildung siliziumhaltiger und/oder kovalenter Strukturen zu einem Elastomer vernetzt wird, wobei ein Elastomer mit einem Vernetzungsgrad von 65 bis 98 %, insbesondere von 70 bis 80 %, und einer Restdehnung von 0,01 bis 5 % bei einer Temperatur zwischen 70 und 170 °C nach einer Relaxationszeit von 15 min aus dem gespannten Zustand der Dauer 15 min, mit einer Spannung von 0,2 bis 1 N / mm$^2$ und einer Dehnung zwischen 40 bis 100 %, und einem Zugverformungsrest (gemessen entsprechend DIN ISO 2285 bei 70 °C) von 10 bis 50 %, bevorzugt von 10 bis 30 %, erhalten wird.

**Beispiele**

Eigenschaften und Zusammensetzung der UV-silanisch und/oder UV-kovalent vernetzten Elastomere aus der erfindungsgemäßen Materialzusammensetzung gemäß der Rezepturen 1 bis 4 (Rez. 1 bis Rez. 4) sind in Tabelle 1 angegeben.

|  | Rez. 1 | Rez. 2 | Rez. 3 | Rez. 4 |
|---|---|---|---|---|
| **Polymer (A)** | | | | |
| Polyolefinelastomer (POE) | | | | |
| Ethylen-1-Octen-Copolymer | 95,0 | 83,3 | 80,3 | 96,5 |
| TPE-S | | | | |
| SEBS | | 13,2 | | |
| Kautschuk | | | | |
| EPDM | | | 14,05 | |
| **Vernetzungsverstärker (B)** | | | | |
| Silanisch | | | | |
| Vinyltrimethoxysilan | 1,5 | | 1,0 | |
| Kovalent | | | | |
| Triallylcyanurat | 1,5 | 1,5 | 0,8 | |
| Pentaerythritoltrimethacrylat | | | | 1,5 |
| **Photoinitiator (C)** | | | | |
| para-Dodecylbenzophenon | 1,5 | 1,5 | 1,8 | 1,5 |
| **Additiv (D)** | | | | |
| Stabilisator (I) | 0,5 | 0,5 | 0,5 | 0,5 |
| Lewis-Säure (F) | | | | |
| Dioctylzinndilaurat | | | 0,05 | |
| Grenzflächenaktive Substanz (G) | | | | |
| Octadecylmethyldimethoxysilan | | | 0,2 | |
| Füllstoff (H) | | | | |
| Aerosil | | | 1,3 | |
| **Zugverformungsrest (%)** | 15 | 26 | 24 | 25 |
| **Reißdehnung (%)** | 344 | 783 | 322 | 677 |
| **Vernetzungsgrad (%)** | 92 | 87 | 72 | 95 |

**Tabelle 1**

In Tabelle 2 sind die Ergebnisse von sogenannten HOT-SET-Untersuchungen an vernetzten Elastomeren aus der erfindungsgemäßen Materialzusammensetzung, die mit UV-Licht vernetzt wurde (gekennzeichnet als Rez. 1 bis Rez. 4) dem Stand der Technik entsprechenden dynamisch vernetzten thermoplastischen Elastomeren (gekennzeichnet als TPV 1 und TPV 2) gegenübergestellt.

Unter "HOT-SET-Untersuchungen" werden im folgenden Untersuchungen verstanden, bei denen Probekörper unter definierten Bedingungen unter eine Zugspannung gesetzt werden, wobei eine zeitabhängige Temperaturbeaufschlagung erfolgt. Es wird dabei jeweils die Dehnung des Probekörpers in Abhängigkeit zur Zeit gemessen.

Die Untersuchungsparameter sind unten angegeben.

Mit Hilfe der "HOT-SET-Untersuchungen" lassen sich besonders vorteilhaft entropieelastische Eigenschaften von Polymermaterialien bestimmen.

Die HOT-SET-Untersuchungen wurden mit folgenden Parametern durchgeführt:

Die Bestimmung der Dehnung wurde in einem Wärmeofen an S2-Prüfkörpern gemäß EN ISO 527-2 : 1996 (Probekörpertyp 5A) durchgeführt.

Hierbei wurden die Prüfkörper 15 Minuten lang bei 130 °C mit einer Spannung von $\square$ = 0,2 bis 0,65 N / mm$^2$ so gedehnt, dass bei den Prüfkörpern eine Dehnung von 40 bis 65 % innerhalb t = 15 min bei T = 130 °C erreicht wurde. Zur Erzeugung dieser Spannung wurden an den Prüfkörper Gewichte befestigt. Das Gewicht wurde wie folgt bestimmt:

Gewicht [kg] =

(Spannung [N / mm$^2$] x Querschnittsfläche [mm$^2$]) / (Ortsfaktor [9,81 N/kg]).

Die Messung der Dehnung fand im Wärmeofen statt, wobei die gegenüber der Ausgangslänge $I_0$ erfolgte Dehnung in [%] anhand der Länge nach der Zeit t [min und/oder s] ($I_{t1}$) bestimmt wurde gemäß

Dehnung [%] = ($I_{t1}$ − $I_{to}$) / ($I_{to}$) x 100.

Im folgenden wurde die Dehnung gemäß Tabelle 2 nach den jeweils angegebenen Zeiten gemessen.

**Ergebnisse Dehnversuche (HOT-SET)**

| | TPV 1 | TPV 2 | Rez. 1 | Rez. 2 | Rez. 3 | Rez. 4 |
|---|---|---|---|---|---|---|
| Spannung $\sigma$ [N / mm$^2$] | 0,3 | 0,65 | 0,6 | 0,2 | 0,65 | 0,2 |
| Zug unter Spannung Dehnung [%] 130 °C | | | | | | |
| 10 s | 27,6 | 4,76 | 56 | 36,04 | 57,25 | 31,58 |
| 1 min | 42,9 | 27,04 | 58 | 49,36 | 57,52 | 35,96 |
| 2 min | 52,7 | 37,77 | 58,5 | 53,77 | 58,71 | 38,67 |
| 3 min | 55,6 | 44,56 | 58,6 | 55,24 | 58,73 | 39,61 |
| 4 min | 57,7 | 49,56 | 58,7 | 56,46 | 58,81 | 40,39 |
| 5 min | 59 | 53,59 | 58,9 | 57,83 | 59,83 | 40,98 |
| 6 min | 60 | 55,63 | 59,3 | 58,52 | 59,87 | 41,48 |
| 7 min | 60,5 | 56,41 | 59,5 | 59,21 | 60,12 | 41,97 |
| 8 min | 61 | 57,18 | 60 | 59,7 | 60,14 | 42,36 |
| 9 min | 61,2 | 57,96 | 60,1 | 60,19 | 60,20 | 42,76 |
| 10 min | 61,6 | 58,98 | 60,3 | 60,77 | 61,27 | 42,76 |
| 11 min | 61,7 | 59,17 | 60,4 | 61,21 | 61,28 | 42,91 |
| 12 min | 62,2 | 59,37 | 60,5 | 61,75 | 61,28 | 43,2 |
| 13 min | 62,4 | 59,61 | 60,6 | 61,95 | 61,29 | 43,4 |
| 14 min | 62,6 | 59,85 | 60,6 | 62,19 | 61,31 | 43,69 |
| 15 min | 62,7 | 60,29 | 60,6 | 62,39 | 61,33 | 43,69 |
| Wegnahme der Spannung Dehnung [%] 130 °C | | | | | | |
| 15 min 10 s | 11,7 | 27,81 | 8,7 | 10,17 | 7,31 | 6,16 |
| 16 min | 11,1 | 26,8 | 6,6 | 9,25 | 6,42 | 5,91 |
| 17 min | 10,5 | 26,07 | 5,2 | 7,3 | 5,10 | 5,42 |
| 18 min | 10,1 | 25,19 | 3,6 | 6,31 | 2,92 | 5,12 |
| 19 min | 9,4 | 24,37 | 3,5 | 5,83 | 2,53 | 4,73 |
| 20 min | 9,2 | 23,79 | 3,4 | 5,48 | 2,15 | 4,53 |
| 21 min | 8,8 | 23,3 | 3,1 | 5,29 | 2,04 | 4,68 |
| 22 min | 8,5 | 22,81 | 3 | 5,09 | 2,03 | 4,33 |
| 23 min | 8,4 | 22,62 | 2,8 | 4,85 | 1,82 | 4,14 |
| 24 min | 8,2 | 22,23 | 2,3 | 4,6 | 1,43 | 3,89 |
| 25 min | 8,1 | 22,18 | 2,1 | 4,5 | 1,40 | 3,64 |
| 26 min | 8 | 22,18 | 2 | 4,41 | 1,40 | 3,55 |
| 27 min | 7,8 | 22,14 | 2 | 4,41 | 1,40 | 3,55 |
| 28 min | 7,6 | 22,09 | 2 | 4,41 | 1,35 | 3,55 |
| 29 min | 7,5 | 22,04 | 2 | 4,31 | 1,35 | 3,45 |
| 30 min | 7,5 | 21,99 | 2 | 4,21 | 1,35 | 3,45 |
| Dehnung [%], Raumtemp. | | | | | | |
| 30 min 10 s | 7,4 | 21,84 | 1,76 | 1,96 | 1,28 | 2,41 |
| 31 min | 7,4 | 21,26 | 1,66 | 1,62 | 1,18 | 1,38 |
| 32 min | 7,3 | 20,97 | 1,17 | 1,32 | 1,06 | 1,33 |
| 33 min | 7,3 | 20,9 | 1,07 | 1,22 | 1,01 | 1,33 |
| 34 min | 7,3 | 20,9 | 1,03 | 1,18 | 0,93 | 1,18 |
| 35 min | 7,3 | 20,9 | 1,03 | 1,13 | 0,91 | 1,08 |
| 36 min | 7,3 | 20,9 | 0,98 | 1,08 | 0,84 | 0,99 |
| 37 min | 7,3 | 20,9 | 0,98 | 1,03 | 0,81 | 0,89 |
| 38 min | 7,3 | 20,9 | 0,93 | 1,03 | 0,75 | 0,84 |
| 39 min | 7,3 | 20,9 | 0,93 | 1,03 | 0,70 | 0,79 |
| 40 min | 7,3 | 20,9 | 0,88 | 0,98 | 0,67 | 0,79 |
| 41 min | 7,3 | 20,9 | 0,88 | 0,98 | 0,63 | 0,79 |
| 42 min | 7,3 | 20,9 | 0,88 | 0,98 | 0,61 | 0,79 |
| 43 min | 7,29 | 20,9 | 0,88 | 0,98 | 0,58 | 0,79 |
| 44 min | 7,29 | 20,9 | 0,83 | 0,93 | 0,54 | 0,74 |
| 45 min | 7,29 | 20,9 | 0,83 | 0,87 | 0,51 | 0,74 |

**Tabelle 2**

Als Vergleich wurden die Materialzusammensetzungen
TPV1

und
TPV2
herangezogen, die hinsichtlich ihrer Zusammensetzung wie folgt charakterisiert sind (alle Angaben in Gewichtsprozent):

| TPV1 | Polymer A: | 55,0 EPDM / 33,0 PP / 9,1 Öl |
|---|---|---|
| | Vernetzungsverstärker: | 1,7 Phenolharz |
| | Additive: | 1,2 Stabilisatoren |
| TPV 2 | Polymer A: | 44,5 EPDM/48,3 PP/4,2 Öl |
| | Vernetzungsverstärker: | 1,7 Phenolharz |
| | Additive: | 1,3 Stabilisatoren. |

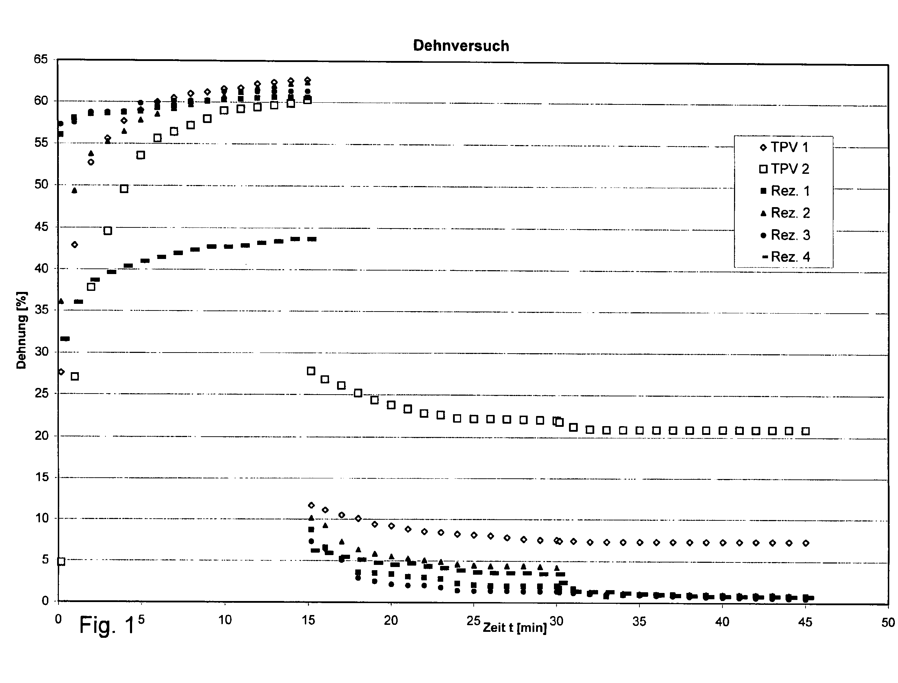

Die Ergebnisse der HOT-SET-Untersuchungen gemäß Tabelle 2 sind grafisch in Fig. 1 abgebildet.

Fig. 1 zeigt dabei die Änderung der Dehnung über die Zeit t. Hierbei ist die Zeit ab Aufbringen der Spannung an den Prüfkörpern aufgetragen, nach 15 min Dehnung wurden die Prüfkörper entspannt, aber bei 130 °C belassen, nach 30 min wurde die Temperatur auf Raumtemperatur gesenkt.

Besonders deutlich ist erkennbar, dass die Elastomere gem. Rez. 1 bis Rez. 4 aus den erfindungsgemäßen Materialzusammensetzungen eine besonders günstige Rückstellung zeigen, die einen erheblich verbesserten Stand zu den TPV-Vergleichsbeispielen TPV 1 und TPV 2 darstellen.

Es zeigen sich hierbei die vorteilhaften Eigenschaften der Elastomeren, hergestellt aus der erfindungsgemäßen Materialzusammensetzung, im Hinblick auf das günstige Verhalten bei der entropieelastischen Rückstellung.

**Patentansprüche**

1. Materialzusammensetzung, geeignet zur Vernetzung mit UV-Strahlung unter Bildung eines Elastomers, **dadurch gekennzeichnet, dass** mindestens 4 Komponenten, welche in Summe 100 Gewichtsprozent ergeben, umfassend

   (A) 80 bis 98,9 Gewichtsprozent mindestens eines Polymers (A), und
   (B) 0,5 bis 8 Gewichtsprozent mindestens eines Vernetzungsverstärkers (B), der UV-silanisch und/oder UV-kovalent vernetzend wirkt, und
   (C) 0,5 bis 8 Gewichtsprozent mindestens eines Photoinitiators (C), der bis 270 °C bei der Verarbeitung von polymeren Formteilen und dabei auftretender Scherbeanspruchung keine Zersetzung zeigt und zur Herabsetzung der Volatilität in der Polymermatrix verankert wird, und
   (D) 0,1 bis 15 Gewichtsprozent mindestens eines Additivs (D)

   enthalten sind,
   die nach der Plastifizierung unter Einwirkung von UV-Strahlung in einem kontinuierlichen Fertigungsverfahren siliziumhaltige und/oder kovalente Vernetzungsstrukturen inter- und/oder intramolekular mit dem Polymer (A) bilden, und das aus der Materialzusammensetzung gebildete Elastomer

   - a - einen Vernetzungsgrad von 65 bis 98 % besitzt, und
   - b - eine entropieelastische Rückstellung zeigt, wobei

     - bei einer Temperatur zwischen 70 und 170 °C und
     - bei einer Spannung von 0,2 bis 1 N / mm$^2$ und
     - nach 15 min Dehnbeanspruchung, wobei eine Dehnung von 40 bis 100 % erzeugt wird,
     - eine Restdehnung von 0,01 bis 5 % nach 15 min Relaxationszeit bei 70 bis 170 °C zurück bleibt, und

   - c - einen Zugverformungsrest (gemessen entsprechend DIN ISO 2285 bei 70 °C) von 10 bis 50 %, bevorzugt 10 bis 30 %,

   aufweist.

2. Materialzusammensetzung nach Anspruch 1, **dadurch gekennzeichnet, dass** das Polymer (A) polare und/oder unpolare und/oder linear-aliphatische und/oder cycloaliphatische und/oder aromatische und/oder gemischt aromatisch-aliphatische Gruppen enthält.

3.  Materialzusammensetzung nach Anspruch 2, **dadurch gekennzeichnet, dass** das Polymer (A) kristallin und/oder semikristallin und/oder amorph ist.

4.  Materialzusammensetzung nach Anspruch 2, **dadurch gekennzeichnet, dass** das Polymer (A) als wesentliches repetierendes Strukturelement eine aliphatische und/oder cycloaliphatische Kohlenwasserstoffgruppe enthält.

5.  Materialzusammensetzung nach Anspruch 4, **dadurch gekennzeichnet, dass** als aliphatische und/oder cycloaliphatische Kohlenwasserstoffgruppe

    (a) eine Methyl-, $-[CH_3]$, und/oder
    (b) eine Methylen-, $-[CH_2]_x-$ mit $x \geq 1$, und/oder
    (c) eine Methyliden-, $[=CH_2]-$, und/oder
    (d) eine $-[CH_2-CHX]-$ und/oder
    (e) eine $-[CH_2-CHR]-$ und/oder
    (f) eine $-[CH_2-CX_2]-$ und/oder
    (g) eine $[=CH-CH_2]-$ und/oder
    (h) eine $[=CH-CHX]-$ und/oder
    (i) eine $[=CH-CHR]-$ und/oder
    (j) eine $[=CX-CH_2]-$ und/oder
    (k) eine $[=CX-CHX]-$ und/oder
    (l) eine $[=CX-CHR]-$ und/oder
    (m) eine $[=CR-CHX]-$ und/oder
    (n) eine $[=CR-CHR]-$Gruppe

    enthalten ist,
    wobei X ein Element der Gruppe der Halogene, R ein organischer Rest, der insbesondere Elemente, ausgewählt aus Wasserstoff und/oder Kohlenstoff und/oder Schwefel und/oder Stickstoff und/oder Sauerstoff, enthalten kann, ist.

6.  Materialzusammensetzung nach Anspruch 2, **dadurch gekennzeichnet, dass** das Polymer (A) als Homopolymer und/oder Copolymer vorliegt.

7.  Materialzusammensetzung nach Anspruch 2, **dadurch gekennzeichnet, dass** das Polymer (A) in seiner Ausgangsform vorliegt und/oder durch

    (a) Pfropfungsreaktionen und/oder
    (b) Additionsreaktionen und/oder
    (c) Kondensationsreaktionen

    mit mindestens einer funktionellen Gruppe modifiziert ist.

8.  Materialzusammensetzung nach Anspruch 7, **dadurch gekennzeichnet, dass** die funktionelle Gruppe insbesondere ausgewählt ist aus:

    (a) einer Hydroxygruppe und/oder
    (b) einer Aminogruppe und/oder
    (c) einer Carbonsäure- und/oder einer Carbonsäureester- und/oder einer Carbonsäureanhydridgruppe und/oder
    (d) einer Imid- und/oder einer Amid- und/oder einer Oxazolin- und/oder
    (e) einer Epoxygruppe und/oder
    (f) einer Silyl- und/oder einer Alkoxysilylgruppe und/oder
    (g) einer ionische Gruppe, wie einer Carboxylatgruppe.

9.  Materialzusammensetzung nach Anspruch 2, **dadurch gekennzeichnet, dass** das Polymer (A) in seiner Ausgangsform vom Typ

    (I) eines Polyolefins und/oder
    (II) eines thermoplastischen Elastomers (TPE), und/oder
    (III) eines Elastomers und/oder eines Kautschuks und/oder
    (IV) eines Polystyrols (PS), und/oder

(V) eines Acrylnitrilbutadienstyrol-Terpolymers (AS), und/oder
(VI) eines Polyurethans (PUR), und/oder
(VII) eines Fluorpolymers und/oder
(VIII) eines thermoplastischen Silikonelastomers und/oder
(IX) eines Ethylen-Styrol-Interpolymers (ESI), und/oder
(X) einer Mischung hiervon

ist.

**10.** Materialzusammensetzung nach Anspruch 9, **dadurch gekennzeichnet, dass** das Polyolefin (I) ein Homo- und/ oder Copolymeres des Ethylen und/oder des Propen und/oder des Buten und/oder des Penten und/oder des Hexen und/oder des Octen und/oder des Isopren und/oder des Ethylidennorbornen und/oder des Cyclopentadien und/oder des Butadien und/oder ein Copolymeres des Etylen mit dem Ester der Acrylsäure oder der Methacrylsäure mit Methanol oder Ethanol oder Butanol und/oder ein Copolymeres des Ethylen mit Vinylacetat, wie

(1) ein Lineares Polyethylen geringer Dichte (linear low density polyethylene (LLDPE)) und/oder
(2) ein Polyethylen geringer Dichte (low density polyethylene (LDPE)) und/oder
(3) ein Polyethylen ultrageringer Dichte (ultra low density polyethylene (ULDPE)) und/oder
(4) ein Lineares Polyethylen geringer Dichte, hergestellt mit Metallocen-Katalysatoren (metallocene linear low density polyethylene (mLLDPE)) und/oder
(5) ein Polyethylen sehr geringer Dichte (very low density polyethylene (VLDPE)) und/oder
(6) ein Polyethylen mit geringen Molekulargewicht (low molecular weight polyethylene (LMWPE)) und/oder
(7) ein Polyethylen mittlerer Dichte (middle density polyethylene (MDPE)) und/oder
(8) ein Polyethylen hoher Dichte (high density polyethylene (HDPE))
(9) ein Polyethylen mit ultrahohem Molekulargewicht (ultra high molecular weight polyethylene (UHMWPE))
(10) ein Polyethylen mit hohem Molekulargewicht (high molecular weight polyethylene (HMWPE))
(11) ein Cycloolefincopolymer (COC)
(12) ein Cycloolefinpolymer (COP)
(13) ein Poly-4-methyl-1-penten
(14) ein Polypropylen (PP) und/oder
(16) ein Polybutadien und/oder
(17) ein Ethylenmethylacrylat-Copolymer (EMA) und/oder
(18) ein Ethylenethylacrylat-Copolymer (EEA) und/oder
(19) ein Ethylenbutylacrylat-Copolymer (EBA) und/oder
(20) ein Ethylenvinylacetat-Copolymer (EVA) und/oder
(21) ein Cycloolefincopolymer (COC) und/oder
(22) ein Cycloolefinpolymer (COP) und/oder
(23) ein Polyolefincompound und/oder
(24) ein Polyolefinelastomer (POE) und/oder
(25) eine Mischung hiervon ist.

**11.** Materialzusammensetzung nach Anspruch 9, **dadurch gekennzeichnet, dass** das thermoplastische Elastomer (II) vom Typ

(1) eines Blockcopolymeren und/oder
(2) einer Elastomerlegierung und/oder
(3) einer Mischung hiervon

ist.

**12.** Materialzusammensetzung nach Anspruch 11, **dadurch gekennzeichnet, dass** das thermoplastische Elastomer (II) vom Typ eines Blockcopolymeren

(a) vom Styroltyp (TPE-S), und/oder
(b) vom Olefintyp (POE), und/oder
(c) ein thermoplastisches Polyether-Ester-Elastomer (TPE-E), und/oder
(d) ein thermoplastisches Polyurethan (TPU), und/oder
(e) ein Polyetherblockamid, PEBAX und/oder

(f) eine Mischung hiervon

ist.

**13.** Materialzusammensetzung nach Anspruch 12, **dadurch gekennzeichnet, dass** das thermoplastische Elastomer (II) vom Typ einer Elastomer-Legierung

(a) ein dynamisch vernetztes thermoplastisches Elastomer (TPV), und/oder
(b) ein thermoplastisches Blend (TPO), und/oder
(c) ein thermoplastisches Silikonvulkanisat (TPVSi), und/oder
(d) eine Mischung hiervon

ist.

**14.** Materialzusammensetzung nach Anspruch 9, **dadurch gekennzeichnet, dass** das Elastomer und/oder der Kautschuk (III)

(1) ein Acrylnitril-Elastomer (ACM), und/oder
(2) ein Cis-1,4-Polybutadien und/oder
(3) ein Chloroprene und/oder ein Neoprenkautschuk (CR), und/oder
(4) ein chlorsulfoniertes Polyethylen (CSM), und/oder
(5) ein Ethylen-Propylen-Dien-Terpolymer (EPDM), und/oder
(6) ein Ethylen-Propylen-Elastomer (EPM), und/oder
(7) ein Fluorelastomer (FKM), und/oder
(8) ein Ethylen-Acryl-Polymer (AEM), und/oder
(9) ein Acrylnitril-Butadien-Elastomer (NBR), und/oder
(10) ein hydrierter Acrylnitril-Butadien-Kautschuk (HNBR), und/oder
(11) ein Naturkautschuk (NR), und/oder
(12) ein chloriertes Polyethylen (PE-C), und/oder
(13) ein Polyesterurethan (AU), und/oder
(14) ein Polyetherurethan (EU), und/oder
(15) ein Polyacrylatkautschuk (ACM), und/oder
(16) ein Butadienkautschuk (BR), und/oder
(17) ein Isoprenkautschuk (IR), und/oder
(18) ein Fluorelastomer (FPM), und/oder
(19) ein Polyolefin mit vulkanisierten Blöcken (TPV), und/oder
(20) eine Mischung hiervon

ist.

**15.** Materialzusammensetzung nach Anspruch 9, **dadurch gekennzeichnet, dass** das Polymer (A) einzeln und/oder als Mischung vorliegt.

**16.** Materialzusammensetzung nach Anspruch 1, **dadurch gekennzeichnet, dass** der Vernetzungsverstärker (B)

(1) UV-silanische Vernetzungsstrukturen und/oder
(2) UV-kovalente Vernetzungsstrukturen und/oder
(3) kombinierte Vernetzungsstrukturen

ausbildet.

**17.** Materialzusammensetzung nach Anspruch 16, **dadurch gekennzeichnet, dass** Verbindungen zur Ausbildung UV-silanischer Vernetzungsstrukturen ausgewählt sind aus den siliziumhaltigen Verbindungen

(1) Vinyltrimethoxysilan und/oder
(2) Vinyltriethoxysilan und/oder
(3) Vinyltriacetoxysilan und/oder
(4) Vinyltris(2-methoxyethoxy)silan und/oder

(5) 3-Methacryloxypropyl-trimethoxysilan und/oder
(6) Methacryloxymethyl-methyldimethoxysilan und/oder
(7) Methacryloxymethyl-trimethoxysilan und/oder
(8) Methacryloxymethyl-methyldiethoxysilan und/oder
(9) Methacryloxymethyl-triethoxysilan und/oder
(10) Octadecylmethyldimethoxysilan und/oder
(11) eine Mischung hiervon.

**18.** Materialzusammensetzung nach Anspruch 17, **dadurch gekennzeichnet, dass** die siliziumhaltige Verbindung in Gegenwart eines Photoinitiators (C) durch UV-Strahlung mit dem Polymer (A) unter Ausbildung einer kovalenten Kohlenstoff-Kohlenstoff-Bindung reagiert.

**19.** Materialzusammensetzung nach Anspruch 17, **dadurch gekennzeichnet, dass** die siliziumhaltige Verbindung in Gegenwart von UV-Strahlung anorganische [$Si_xO_y$]-Einheiten ausbildet.

**20.** Materialzusammensetzung nach Anspruch 19, **dadurch gekennzeichnet, dass** die anorganischen [$Si_xO_y$]-Einheiten das Polymer (A) inter- und/oder intramolekular vernetzen.

**21.** Materialzusammensetzung nach Anspruch 19 und 20, **dadurch gekennzeichnet, dass** die Reaktion der siliziumhaltigen Verbindung zu vernetzenden [$Si_xO_y$]-Einheiten unter dem Einfluss von Luftsauerstoff und/oder Ozon und/oder Lewis-Säuren begünstigt wird.

**22.** Materialzusammensetzung nach Anspruch 16, **dadurch gekennzeichnet, dass** Verbindungen zur Ausbildung UV-kovalenter Vernetzungsstrukturen ausgewählt sind aus

(1) Triallylcyanurat (TAC), und/oder
(2) Triallylisocyanurat (TAIC), und/oder
(3) Trimethallylisocyanurat (TMAIC), und/oder
(4) Trimethylolpropantrimethacrylat (TRIM), und/oder
(5) Pentaerythritol-triacrylat und/oder
(6) Pentaerythritol-trimethacrylat und/oder
(7) Pentaerythritol-tetraacrylat und/oder
(8) Pentaerythritol-tetramethacrylat und/oder
(9) Dipentaerythritol-pentaacrylat und/oder
(10) Dipentaerythritol-pentamethacrylat und/oder
(11) Ditrimethylolpropan-tetraacrylat und/oder
(12) Ditrimethylolpropan-tetramethacrylat und/oder
(13) Polymethylen-Polyphenylen-N-maleinimid und/oder
(14) Tris(4-vinyloxybutyl)trimellitat und/oder
(15) Bis(4-vinyl-oxybutyl)isophthalat und/oder
(16) einer Mischung hiervon.

**23.** Materialzusammensetzung nach Anspruch 16, **dadurch gekennzeichnet, dass** Verbindungen zur Ausbildung UV-kovalenter Vernetzungsstrukturen, bezogen auf 100 Gewichtsprozent Polymer (A), zwischen 0,5 und 10 Gewichtsprozent, bevorzugt zwischen 1 und 3 Gewichtsprozent, eingesetzt wird.

**24.** Materialzusammensetzung nach Anspruch 1, **dadurch gekennzeichnet, dass** der Photoinitiator (C)

(1) ein Derivat des Benzophenons und/oder
(2) ein Derivat des Benzils und/oder
(3) IRGACURE™ 754, ein Zweikomponentensystem aus Oxy-phenyl-essigsäure-2-[2-(2-oxo-2-phenyl-acetoxy-ethoxy]-ethylester und Oxy-phenyl-essigsäure-2-(2-hydroxy-ethoxy)ethylester und/oder
(4) IRGACURE™ 369, 2-Benzyl-2(dimethylamino)-4-morpholinobutyrophenon und/oder
(5) eine Mischung hiervon

ist.

**25.** Materialzusammensetzung nach Anspruch 24, **dadurch gekennzeichnet, dass** das Derivat des Benzophenons und/oder das Derivat des Benzils UV-Absorptionsbanden aufweist, die komplementär zu den Banden im Emissionsspektrum der UV-Strahlenquelle liegen.

26. Materialzusammensetzung nach Anspruch 24, **dadurch gekennzeichnet, dass** die Substituenten des Derivats des Benzophenons und/oder des Derivats des Benzils in den Positionen 1 bis 10, wahlweise in den Positionen 1 und/oder 2 und/oder 3 und/oder 4 und/oder 5 und/oder 6 und/oder 7 und/oder 8 und/oder 9 und/oder 10, der Benzolringe

- Wasserstoffatome und/oder
- Alkyl- (C1 bis C24) und/oder Cycloalkyl- und/oder Cycloalkenyl- und/oder Alkenylgruppen und/oder
- Alkylglycol- und/oder Alkenylglycolgruppen und/oder
- Acyl- und/oder Acylamid und/oder Acylimidgruppen und/oder
- Alkanoyl- und/oder Alkenoylgruppen und/oder
- Amino- und/oder Aminoalkyl und/oder Aminoalkenyl- und/oder Aminoalkenylglycoylgruppen und/oder
- Imino- und/oder Iminoalkyl- und/oder Iminoalkenyl- und/oder Iminoalkenylglycoyl- und/oder Hydroxy- und/oder
- Alkoxy- und/oder Alkenoxy- und/oder
- Benzyl- und/oder Phenyl- und/oder Phenoxy- und/oder Phenylamin- und/oder Diphenylimin- und/oder N-Heterocylen auf Basis von Pyridin, Pyrrol, Pyrrazol, Pyrrolidon, Pyrrolidinopyridin, Pyrimidin, Pyrazin, Pyridazin, Pyrazol, Imidazol, Piperidin, Tetrahydrofuran, Furan, Lacton und/oder
- Chlorogruppen

sind.

27. Materialzusammensetzung nach Anspruch 26, **dadurch gekennzeichnet, dass** die Reste R der Ketalgruppen des Benzils Methyl- und/oder Ethyl- und/oder Propyl- und/oder Butyl-Gruppen sind.

28. Materialzusammensetzung nach Anspruch 19, **dadurch gekennzeichnet, dass** der Photoinitiator (C) insbesondere para-Dodecylbenzophenon ist.

29. Materialzusammensetzung nach Anspruch 28, **dadurch gekennzeichnet, dass** para-Dodecylbenzophenon über den Dodecylrest

(1) an die Polymermatrix kovalent durch UV-Strahlung gebunden wird und
(2) mit seinem positiven induktiven Effekt (+I-Effekt) bis 270 °C keine Zersetzung und/oder thermischen Abbau und/oder Spaltung der Acylbindung zeigt.

30. Materialzusammensetzung nach Anspruch 1, **dadurch gekennzeichnet, dass** als Additiv (D) mindestens eine weitere Komponenten enthalten ist, umfassend

(E) Radikalfänger und/oder
(F) Lewis-Säuren und/oder
(G) Grenzflächenaktive Substanzen und/oder
(H) Füllstoffe und/oder
(I) Verarbeitungshilfsmittel und/oder
(J) Mischungen hiervon.

31. Materialzusammensetzung nach Anspruch 30, **dadurch gekennzeichnet, dass** der Radikalfänger (E)

(1) ein Methylethylketon und/oder
(2) ein Methylisobutylketon und/oder
(3) ein sterisch gehindertes Amine (HALS), und/oder
(4) ein Benzotriazol und/oder
(5) ein Diphenylacrylat und/oder
(6) ein Zimtsäureester und/oder
(7) ein Derivat des 2,2,6,6-Tetramethyl-piperidin-1-oxyl (TEMPO), und/oder
(8) ein 4-Hydroxycoumarin und/oder
(9) ein D, L-$\alpha$-Tocopherol und/oder
(10) eine Mischung hiervon

ist.

**32.** Materialzusammensetzung nach Anspruch 31, **dadurch gekennzeichnet, dass** ein Radikalfänger (E) zwischen 0,01 und 0,5 Gewichtsprozent, bezogen auf 100 Gewichtsprozent Polymer, enthalten ist.

**33.** Materialzusammensetzung nach Anspruch 30, **dadurch gekennzeichnet, dass** die Lewis-Säure (F)

(1) ein Zinndioctanoat und/oder
(2) ein Zinnoxalat und/oder
(3) ein Zinnoxid und/oder
(4) ein Dioctylzinndilaurat und/oder
(5) ein Dibutylzinndilaurat und/oder
(6) ein Laurylstannoxan und/oder
(7) ein Dibutylzinncarboxylat und/oder
(8) ein Monobutylzinntris(2-ethylhexanoat) und/oder
(9) ein Dibutylzinndiisooctanoat und/oder
(10) ein Dibutylzinndiacetat und/oder
(11) ein Dibutylzinnoxid und/oder
(12) eine Mischung hiervon

ist.

**34.** Materialzusammensetzung nach Anspruch 33, **dadurch gekennzeichnet, dass** die Lewis-Säure (F) zwischen 0,01 und 0,2 Gewichtsprozent, bezogen auf 100 Gewichtsprozent Polymer, enthalten ist.

**35.** Materialzusammensetzung nach Anspruch 33, **dadurch gekennzeichnet, dass** die Lewis-Säure (F)

(1) durch Ausbildung von Charge-Transfer-Verbindungen und/oder
(2) über van-der-Waals-Wechselwirkungen mit den polaren Silylalkoxygruppen Si-O-R

eine Spaltung der Si-O- und/oder O-R-Bindungen bewirkt und siliziumhaltige Fragmente entstehen.

**36.** Materialzusammensetzung nach Anspruch 30, **dadurch gekennzeichnet, dass** die grenzflächenaktive Substanz (G) eine siliziumhaltige Verbindung ist.

**37.** Materialzusammensetzung nach Anspruch 36, **dadurch gekennzeichnet, dass** die grenzflächenaktive Substanz (G) ausgewählt sind aus

(1) einem Vinyltrimethoxysilan und/oder
(2) einem Vinyltriethoxysilan und/oder
(3) einem Vinyltriacetoxysilan und/oder
(4) einem Vinyltris(2-methoxyethoxy)silan und/oder
(5) einem 3-Methacryloxypropyl-trimethoxysilan und/oder
(6) einem Methacryloxymethyl-methyldimethoxysilan und/oder
(7) einem Methacryloxymethyl-trimethoxysilan und/oder
(8) einem Methacryloxymethyl-methyldiethoxysilan und/oder
(9) einem Methacryloxymethyl-triethoxysilan und/oder
(10) einem Methyltrimethoxysilan und/oder
(11) einem Methyltriethoxysilan und/oder
(12) einem Dimethyldiethoxysilan und/oder
(13) einem Trimethylethoxysilan und/oder
(14) einem Isooctyltrimethoxysilan und/oder
(15) einem Isooctyltriethoxysilan und/oder
(16) einem Hexadecyltrimethoxysilan und/oder
(17) einem Cyclohexylmethyldimethoxysilan und/oder
(18) einem Dicyclopentyldimethoxysilan und/oder
(19) einem Phenyltriethoxysilan und/oder
(20) einem Octadecylmethyldimethoxysilan und/oder

(21) einem 3-Aminopropyltriethoxysilan und/oder
(22) einem 3-Aminopropyltrimethoxysilan und/oder
(23) einem Glycidylpropyltrimethoxysilan und/oder
(24) einem 3-Aminopropyldiethoxysilan und/oder
(25) einem Octamethylcyclotetrasiloxan und/oder
(26) einem Decamethylcyclopentasiloxan und/oder
(27) einem Dodecamethylcyclohexasiloxan und/oder
(28) einem Hexamethyldisiloxan und/oder
(29) einem Hexamethyldisilazan und/oder
(30) einem Hexamethyldisilan und/oder
(31) einem Tetramethylsilan und/oder
(32) einem Tetraethoxysilan und/oder
(33) einem Trimethylsilyldimethylamin und/oder
(34) einer Mischung hiervon.

38. Materialzusammensetzung nach Anspruch 36, **dadurch gekennzeichnet, dass** die grenzflächenaktive Substanz (G) zwischen 0,1 und 10 Gewichtsprozent, bezogen auf 100 Gewichtsprozent Polymer, enthalten ist.

39. Materialzusammensetzung nach Anspruch 30, **dadurch gekennzeichnet, dass** die grenzflächenaktive Substanz (G) zur Anbindung von silikatischen Füllstoffen, wie Glasfasern und/oder anorganischen Füllstoffen auf Basis von Metalloxiden und/oder Schichtsilikaten und/oder Talkum und/oder Kaolin und/oder Wollastonit und/oder Zeolithen UV-vernetzend an die Polymermatrix führt.

40. Materialzusammensetzung nach Anspruch 30, **dadurch gekennzeichnet, dass** der Füllstoff (H) ausgewählt ist aus Fasern und/oder Pulver und/oder Partikel, bestehend aus Metallen und/oder Kohlenstoff-Modifikationen und/oder Naturstoffen und/oder Gläsern und/oder Keramiken und/oder Metalloxiden und/oder Kunststoffen und/oder Schichtsilikaten.

41. Materialzusammensetzung nach Anspruch 40, **dadurch gekennzeichnet, dass** die Metalloxide als

   (a) sphärolithische Metalloxidpartikel und/oder
   (b) monodisperse Metalloxidnanopartikel und/oder
   (c) nanoskalige Metalloxidfasern und/oder
   (d) nanoskalige Keramikwhisker und/oder
   (e) Schichtsilikate und/oder
   (f) Aerosile hydrophil und/oder hydrophobiert und/oder
   (g) Aerogele hydrophil und/oder hydrophobiert und/oder
   (h) Zeolithe und/oder
   (i) Silsesquioxane und/oder
   (j) als Mischungen hiervon

vorliegen.

42. Materialzusammensetzung nach Anspruch 41, **dadurch gekennzeichnet, dass** die Schichtsilikate aus

   (a) Smectit-Schichtsilikaten der Montmorillonit- oder Beidellit-Reihe, umfassend Montmorillonit $Na_{0,33}\{(Al_{1,67}Mg_{0,33})(OH)_2[Si_4O_{10}]\}$ und/oder
   (b) Beidellit $(Ca,Na)_{0,3}\{Al_2(OH)_2[Al_{0,5}Si_{3,5}O_{10}]\}$ und/oder
   (c) Nontronit $Na_{0,33}\{Fe_2(OH)_2[Al_{0,33}Si_{3,67}O_{10}]\}$ und/oder
   (d) Saponit $(Ca,Na)_{0,33}\{(Mg,Fe)_3(OH)_2[Al_{0,33}Si_{3,67}O_{10}]\}$ und/oder
   (e) Hectorit $Na_{0,33}\{Mg,Li)_3(OH, F)_2[Si_4O_{10}]\}$ und/oder
   (f) exfolierten Schichtsilikaten und/oder
   (g) Organoclays und/oder
   (h) Mischungen hiervon

bestehen.

43. Materialzusammensetzung nach Anspruch 41, **dadurch gekennzeichnet, dass** die Aerosile und/oder Aerogele aus Silikaten und/oder Titandioxid und/oder Zirkoniumdioxid und/oder Dialuminiumtrioxid bestehen.

44. Materialzusammensetzung nach Anspruch 41, **dadurch gekennzeichnet, dass** die monodispersen Metalloxidnanopartikel aus $RSi(OR')_3$ und/oder $RR''Si(OR')_2$ und/oder $R_2Si(OR')_2$ und/oder $Ti(OR)_4$ und/oder $Zr(OR)_4$ und/oder $Al(OR)_3$ und/oder Mischungen hiervon gebildet werden.

45. Materialzusammensetzung nach Anspruch 41, **dadurch gekennzeichnet, dass** die nanoskaligen Metalloxidfasern und/oder nanoskaligen Keramikwhisker

(a) Titandioxid, $TiO_2$ (Rutil- und/oder Anatas- und/oder Brookit-Modifikation) und/oder
(b) Zirkoniumdioxid, $ZrO_2$ (monoklines $\alpha$-$ZrO_2$ und/oder tetragonales $\beta$-$ZrO_2$ und/oder kubisches $\gamma$-$ZrO_2$), und/oder
(c) Dialuminiumtrioxid, $Al_2O_3$ (hexagonales $\alpha$-$Al_2O_3$ und/oder $\gamma$-$Al_2O_3$ mit kubisch dichtester Packung)

enthalten.

46. Materialzusammensetzung nach Anspruch 41, **dadurch gekennzeichnet, dass** die nanoskaligen Metalloxidfasern und/oder nanoskaligen Keramikwhisker Mischoxide, ausgewählt aus $Al_2O_3$ und/oder $TiO_2$ und/oder $ZrO_2$ und/oder $Y_2O_3$ und/oder $B_2O_3$ und/oder $SiO_2$ und/oder $FeO$ und/oder $Fe_2O_3$ und/oder $Na_2O$ und/oder $CaO$ und/oder $MgO$ und/oder $K_2O$, sind.

47. Materialzusammensetzung nach Anspruch 41, **dadurch gekennzeichnet, dass** die nanoskaligen Metalloxidfasern und/oder nanoskaligen Keramikwhisker einzeln und/oder in Bündeln vorliegen, wobei die Faserlänge 50 nm bis 2 cm, der Außendurchmesser 1 nm bis 500 nm und das Längen/Dickenverhältnis größer 20 beträgt.

48. Materialzusammensetzung nach Anspruch 40, **dadurch gekennzeichnet, dass** der Füllstoff (H) zwischen 0,1 und 40 Gewichtsprozent, bezogen auf 100 Gewichtsprozent Polymer, enthalten ist.

49. Materialzusammensetzung nach Anspruch 30, **dadurch gekennzeichnet, dass** das Verarbeitungshilfsmittel (I) ausgewählt ist aus

(1) einem Stabilisator und/oder
(2) einer elektrisch leitfähigen Substanz und/oder
(3) einer antielektrostatischen Substanz und/oder
(4) einer antimikrobiellen Substanz und/oder
(5) einer bakteriziden Substanz und/oder
(6) einem Schaumbildner und/oder
(7) einem Hilfsmittel zur Hydrophobierung und/oder
(8) einem flammhemmendem Hilfsmittel und/oder
(9) einer Mischungen hiervon.

50. Materialzusammensetzung nach Anspruch 49, **dadurch gekennzeichnet, dass** das Verarbeitungshilfsmittel (I) zwischen 0,1 und 40 Gewichtsprozent, bezogen auf 100 Gewichtsprozent Polymer, enthalten ist.

51. Verwendung der Materialzusammensetzung gemäß einem der Ansprüche 1 bis 50 zur Herstellung von Formteilen, ausgewählt aus Extrudaten, Coextrudaten, Compositen und Verbundwerkstoffen.

52. Verwendung der Materialzusammensetzung gemäß einem der Ansprüche 1 bis 50 zur Herstellung von Formteilen jeglicher Art, insbesondere von Schläuchen, Dichtungen, Manschetten, Fasern, und Profilen.

53. Verfahren zur UV-Vernetzung einer Materialzusammensetzung nach einem der Ansprüche 1 bis 50,**dadurch gekennzeichnet, dass** in einem kontinuierlichen Fertigungsprozess aus der Materialzusammensetzung durch Plastifizieren und nachfolgendes Formen ein Formteil bereitgestellt wird,
das eine Wandstärke von größer 0,5 mm aufweist,
welches bei einer Fertigungsgeschwindigkeit von 5 bis 100 m/min
unter Einstrahlung von UV-Licht
der Wellenlänge 120 bis 450 nm
mit einer Strahlungsintensität im UV-Bereich von 10 bis 200 W/cm,

ausgesandt von mindestens einer monochromatischen und/oder polychromatischen UV-Strahlenquelle, umfassend einen Excimer-Laser, ausgewählt aus einem Xenon-Fluorid- oder einem Xenon-Chlorid- oder einem Krypton-Fluorid- oder einem Krypton-Chlorid-Laser, und/oder

einer Excimer-Lampe, ausgewählt aus einer Xenon-Chlorid- oder einer Krypton-Chlorid- oder einer Krypton-Bromid-Lampe,

und/oder

einer Quecksilberdampflampe mit Mikrowellenanregung oder Lichtbogenanregung

und/oder

einer Quecksilberdampflampe mit Eisen- oder Gallium-Indium- oder Gallium-Blei-Dotierung,

wobei das UV-Licht vor, während oder nach dem Erstarren der plastifizierten Materialzusammensetzung eingestrahlt wird

und

welches unter Ausbildung siliziumhaltiger und/oder kovalenter Strukturen vernetzt wird,

wobei ein Elastomer mit

- einem Vernetzungsgrad von 65 bis 98 %, insbesondere von 70 bis 80 %, und
- einer Restdehnung von 0,01 bis 5 % bei einer Temperatur zwischen 70 °C und 170 °C nach einer Relaxationszeit von 15 min aus dem gespannten Zustand einer Dauer von 15 min, mit einer Spannung von 0,2 bis 1 N / mm$^2$ und einer Dehnung zwischen 40 bis 100 %, und
- einem Zugverformungsrest (gemessen entsprechend DIN ISO 2285 bei 70 °C) von 10 bis 50 %, bevorzugt von 10 bis 30 %,

erhalten wird.

Fig. 1

**Europäisches Patentamt**

**EUROPÄISCHER RECHERCHENBERICHT**

Nummer der Anmeldung

EP 05 01 2080

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2004/005398 A (THE PROCTER & GAMBLE COMPANY) 15. Januar 2004 (2004-01-15) <br><br> * Seite 9, Absatz 1; Ansprüche 1,5-8,14; Beispiele 1b,2b * <br> * Seite 17, Absatz 2 * <br> ----- | 1-16, 22-28, 30,49-52 | C08K5/00 <br> C08J3/28 <br> C08J3/24 |
| Y | US 2004/242779 A1 (CAI KEVIN ET AL) 2. Dezember 2004 (2004-12-02) <br> * Absätze [0044], [0045], [0047], [0049]; Ansprüche 1,7,15,49; Beispiele 1-4 * <br><br> ----- | 1-53 | |
| Y | EP 1 329 303 A (SEKISUI CHEMICAL CO., LTD) 23. Juli 2003 (2003-07-23) <br> * Absätze [0039] - [0041], [0083], [0084], [0087], [0088], [0094] - [0096]; Beispiele 12,18,20,22,24,26 * <br> ----- | 1-53 | |

RECHERCHIERTE SACHGEBIETE (IPC)

C08K
C08J
C08F

Der vorliegende Recherchenbericht wurde für alle Patentansprüche erstellt

| Recherchenort | Abschlußdatum der Recherche | Prüfer |
|---|---|---|
| München | 22. Dezember 2005 | Sperry, P |

EPO FORM 1503 03.82 (P04C03)

# EP 1 674 513 A1

ANHANG ZUM EUROPÄISCHEN RECHERCHENBERICHT
ÜBER DIE EUROPÄISCHE PATENTANMELDUNG NR.

EP 05 01 2080

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-12-2005

| Im Recherchenbericht angeführtes Patentdokument | Datum der Veröffentlichung | Mitglied(er) der Patentfamilie | Datum der Veröffentlichung |
|---|---|---|---|
| WO 2004005398 A | 15-01-2004 | AU 2003253769 A1<br>CA 2489168 A1<br>CN 1665879 A<br>EP 1517958 A1<br>JP 2005530030 T | 23-01-2004<br>15-01-2004<br>07-09-2005<br>30-03-2005<br>06-10-2005 |
| US 2004242779 A1 | 02-12-2004 | WO 2004108773 A1 | 16-12-2004 |
| EP 1329303 A | 23-07-2003 | CA 2421642 A1<br>WO 0222343 A1<br>US 2003175539 A1 | 21-03-2002<br>21-03-2002<br>18-09-2003 |

EPO FORM P0461

Für nähere Einzelheiten zu diesem Anhang : siehe Amtsblatt des Europäischen Patentamts, Nr.12/82